# FASCICULE DE BREVET EUROPEEN

(11) **EP 4 127 602 B1**
(45) Date de publication et mention de la délivrance du brevet: **24.04.2024**
(21) Numéro de dépôt: 21720565.7
(22) Date de dépôt: 30.03.2021
(51) Int. Cl.: G01B 17/00, A01K 27/00, A01K 15/02, A41D 1/00, A41F 9/00

(54) **KIT ET PROCÉDÉS POUR LE MAINTIEN D'UNE DISTANCE ENTRE DES PERSONNES OU DES ANIMAUX**
KIT UND VERFAHREN ZUM HALTEN EINES ABSTANDS ZWISCHEN PERSONEN ODER TIEREN
KIT AND METHODS FOR KEEPING A DISTANCE BETWEEN PERSONS OR ANIMALS

(30) Priorité: 01.04.2020 FR 2003277
(43) Date de publication de la demande: 08.02.2023
(73) Titulaire: Stona, Daniel, 1201 Geneve (CH)
(72) Inventeur: Stona, Daniel, 1201 Geneve (CH)
(74) Mandataire: Stona, Daniel
(86) Numéro de dépôt international: PCT/IB2021/052634
(87) Numéro de publication internationale: WO 2021/198910

(56) Documents cités:
- JP-A- S6 246 282
- US-A1- 2017 181 485
- US-B1- 10 251 788

## Description

L'invention concerne un dispositif pour le maintien d'une distance entre des éléments, qui peut être utilisé par exemple sous la forme d'une ceinture pour le respect d'une distance, notamment de sécurité, entre des personnes.

L'invention a également trait à un kit comprenant un tel dispositif ainsi qu'à un procédé pour le maintien d'une distance entre des personnes.

### Arrière-plan de l'invention

L'apparition récente du virus *corona* dénommé "COVID-19" et improprement désigné par l'anglicisme "coronavirus", a obligé les peuples impréparés comme les Français, les Suisses et les Italiens, à respecter des consignes sanitaires telles que le maintien d'une distance dite "de sécurité", par rapport à leurs voisins au sens large du terme, à savoir, toutes personnes se trouvant à leur proximité en quelque lieu que ce soit.

Cependant, il est parfois très difficile, en particulier pour les populations "de culture latine" tels que les Italiens, les Espagnols, les Brésiliens, les Cubains, et, dans une moindre mesure, les Français et les Romands, de respecter la distance de sécurité recommandée.

Un appareil de mesure de distance pour personnes est divulgué dans le document US 10,251,788 B1. Ce document montre un dispositif d'aide aux personnes non voyantes comprenant un bracelet équipé de plusieurs capteurs ultrasoniques pour mesurer la distance d'un objet à proximité et un appareil pour analyser les signaux mesurés et avertir l'utilisateur lorsqu'une distance minimale de sécurité n'est plus assurée.

### Exposé sommaire de l'invention

Le but de l'invention est donc d'apporter une solution au problème posé par le respect d'une distance de sécurité entre des personnes et, plus généralement, au problème du maintien d'une distance entre des éléments.

Selon l'invention, ce but est atteint par un kit tel que décrit dans la revendication 1, des procédés tels que décrits dans les revendications 5 et 6, ainsi que l'utilisation dudit kit telle que décrite dans la revendication 7.

D'autres caractéristiques et avantages de l'invention vont maintenant être décrits en détail dans l'exposé suivant qui est donné en référence aux figures annexées, lesquelles représentent schématiquement :
[Fig. 1] : le dispositif selon l'invention, en vue de dessus ;
[Fig. 2] : le dispositif selon l'invention, mis en place sur une personne ;
[Fig. 3] : un exemple d'ordinogramme correspondant au fonctionnement de l'appareil appartenant au kit selon l'invention ; et
[Fig. 4] : une variante de l'ordinogramme de la figure 3.

### Exposé détaillé de l'invention

### Dispositif selon l'invention

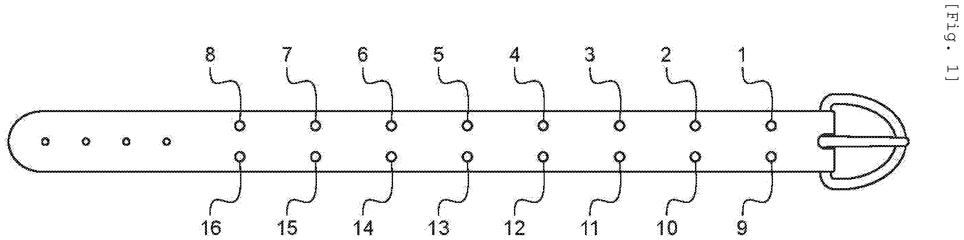

Un exemple de mode de réalisation avantageux du dispositif selon l'invention est représenté sur la figure 1.

Sur cette figure, le dispositif selon l'invention revêt la forme d'une ceinture comportant, de façon classique, une boucle à une extrémité et des trous de fixation à l'autre. Entre ces extrémités longitudinales s'étendent des capteurs 1 à 8 et 9 à 17 qui sont de préférence regroupés par paires [(1,9), (2,10), etc. jusqu'à (8,16)]. Les distances entre deux paires adjacentes sont préférablement identiques.

Les capteurs sont avantageusement de deux types : des capteurs infrarouges et des capteurs à ultrasons. Ces capteurs sont bien connus et se trouvent depuis longtemps dans le commerce. Les capteurs d'un type peuvent être tous alignés d'un côté et les capteurs de l'autre type de l'autre côté, face à face, le long de l'extension longitudinale de la ceinture. Les paires sont alors à chaque fois constituées d'un capteur à ultrasons et d'un capteur infrarouge.

Les capteurs à ultrasons sont aptes à détecter avec une bonne précision qu'un objet se trouve à une certaine distance, c'est pour cette raison qu'ils sont souvent utilisés comme détecteurs de proximité dans des véhicules automobiles, comme ceux vendus sous la marque Peugeot^{®}.

Les capteurs infrarouges sont aptes à détecter la présence d'un corps ayant une certaine température.

L'utilisation combinée de ces deux capteurs permet donc d'éviter la détection d'un obstacle froid, comme un mur, et celle d'un objet trop éloigné. Par conséquent, lorsque les deux capteurs fournissement concomitamment des signaux de détection, cela signifie qu'il y a de bonnes chances que l'élément détecté soit un être humain situé à proximité. Bien entendu, il pourrait s'agir d'un gros chien tel qu'un saint-bernard, mais ces adorables créatures fréquentent peu les centres urbains, lieux où l'invention trouvera certainement plus d'applications qu'à Lustinchellu.

Selon l'invention, la ceinture est équipée d'une batterie ou une ou plusieurs piles (non représentées), afin de pouvoir alimenter électriquement les capteurs, dont la sensibilité (distance ou température) est de préférence réglable.

En outre, les capteurs sont couplés à des moyens électroniques leur permettant d'émettre un signal, de préférence sous forme d'onde électromagnétique, notamment suivant la norme Bluetooth^{®}.

Il est souhaitable que chaque paire soit gérée par des moyens électroniques qui n'envoient un signal que lorsqu'à la fois le capteur infrarouge et le capteur à ultrasons détectent quelque chose.

Le signal émis par chaque capteur ou chaque paire de capteurs a préférablement une fréquence qui lui est propre.

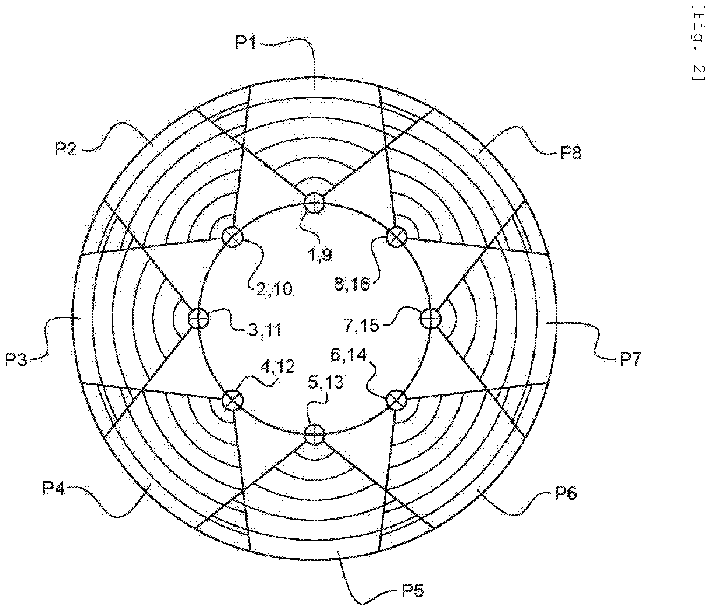

Sur la figure 2 est représentée la ceinture sous une forme entourant le corps d'une personne (non représentée). On voit que les capteurs sont répartis de manière à réaliser une détection sur 360 degrés, de préférence régulièrement sur le long de ceinture.

Pour améliorer le positionnement des capteurs autour du porteur de la ceinture, il est possible de prévoir que les capteurs ou les paires de capteurs soient réglables en position longitudinale les uns/unes par rapport aux autres. Les huit paires de capteurs visibles sur la figure 1 peuvent être orientées régulièrement, par exemple vers les points cardinaux et quatre points intercardinaux.

Bien entendu, si la personne est un(e) punk ou un aficionado d'art gothique, le dispositif selon l'invention peut prendre la forme d'un collier et être placé autour du cou de cette personne.

Le dispositif selon l'invention peut aussi mettre être mis en place dans un casque ou avoir la forme d'un casque, d'un chapeau ou autre couvre-chef.

### Kit selon l'invention

Le dispositif qui vient d'être décrit est destiné à fonctionner avec un appareil et à former avec lui un kit.

Cet appareil est donc apte à recevoir les signaux émis par les capteurs ou paires de capteurs, à les analyser et à émettre au moins un avertissement sonore, lumineux et/ou vibratoire.

Bien qu'il soit parfaitement concevable de produire un appareil *sui generis,* il est judicieux d'utiliser un appareil comportant en son sein toutes les fonctions précitées et qui constitue de nos jours quasiment une extension du corps humain, à savoir, un ordiphone, mieux connu par la plèbe sous les marques Smartphone^{®} ou iPhone^{®}.

### Fonctionnement global

L'utilisateur met la ceinture autour de sa taille (ou le collier autour de son cou), la met en marche, lance l'appareil et vaque à ses occupations mondaines. A chaque fois qu'il s'approche trop d'une personne ou qu'une personne s'approche trop de lui, l'appareil émet un avertissement sonore, lumineux et/ou se met à vibrer pour l'inviter à s'éloigner de cette personne.

L'utilisateur peut régler son appareil en vue de choisir le type d'avertissement ou la combinaison d'avertissements qu'il désire.

De préférence, plusieurs avertissements différents sont prévus, chaque avertissement correspondant à point cardinal ou intercardinal. Par exemple, l'avertissement peut-être un message sonore, comme « attention, personne à droite », « danger à l'arrière », « attention devant », « danger sud-ouest », ou, pour les Bretons, « prendre à babord », « prendre à tribord », etc.

La distance de sécurité peut être préalablement définie, il s'avère que pour le COVID-19, elle est de 1 mètre pour l'Italie, 1,5 mètre pour la France et 2 mètres pour la Suisse, les différences entre ces distances étant probablement davantage corrélées au caractère latin des habitants de ces pays qu'à une différence de leurs métabolismes.

Les plages de détection (P1 à P8) des paires [(1,9) à (8,16)] de capteurs à infrarouges 1 à 8 et de détecteurs à ultrasons 9 à 16 sont visibles sur la figure 2. Elles peuvent se recouvrir mais ceci n'a pas d'importance. Au contraire même, un double signalement peut apporter plus de précision à l'utilisateur.

Il va de soi que des variantes peut être envisagées. A titre d'exemple, il peut être prévu de n'activer que certains capteurs, comme ceux concernant l'arrière et correspondant aux plages P3 à P7.

### Procédé selon l'invention

Afin de pouvoir mettre en œuvre la surveillance de l'utilisateur à l'aide du dispositif selon l'invention, l'appareil doit évidemment être doté d'au moins les composants suivants : un microprocesseur, une mémoire, un avertisseur sonore, lumineux ou vibratoire, une batterie et un récepteur apte à recevoir les signaux en provenance des capteurs du dispositif selon l'invention.

La mémoire de l'appareil contient un programme organisant les tâches à effectuer par le microprocesseur.

Comme cela a été expliqué précédemment, l'appareil peut avantageusement être un ordiphone. Dans ce cas, le programme peut être une application pour mobile, téléchargée sur un site internet ou une boutique en ligne d'applications mobiles (en anglais, "store", comme "Galaxy Store", "Play Store", etc. )

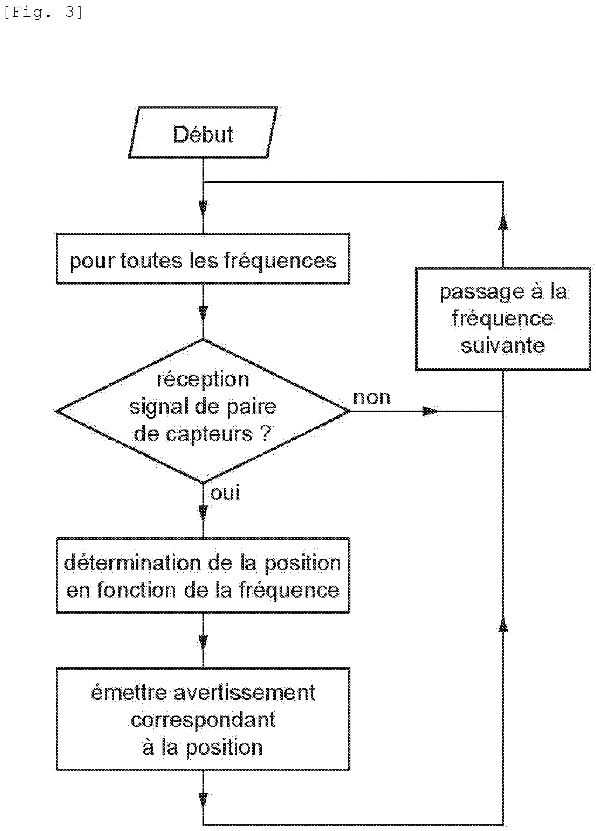

Une fois le dispositif selon l'invention fixé sur son corps (taille, cou...) et mis sous tension, l'utilisateur peut alors mettre en route l'appareil ou lancer l'application mobile, lequel/laquelle effectue les opérations principales déclinées sur la figure 3 qui traite du cas où les paires de capteurs envoient un signal unique en cas de double détection.

Ces opérations sont commentées comme suit.

Après le démarrage, le microprocesseur balaie toute la plage de fréquences prévue, à la recherche d'un signal émis suivant la norme utilisée par le dispositif selon l'invention (Bluetooth^{®}, Wifi^{®}, etc.).

En cas d'absence de signal, il reprend inlassablement son balayage des fréquences.

En cas de réception d'un signal, il puise dans la mémoire la position correspondant à la fréquence du signal détecté, puis il émet l'avertissement qui est fonction de la position puisée ("attention, danger à droite", etc.)

Ensuite, il s'en retourne au balayage de la plage de fréquences.

Des temporisations peuvent être prévues en relation avec chaque paire de capteurs pour éviter que les mêmes avertissements soient répétés trop de fois d'affilée.

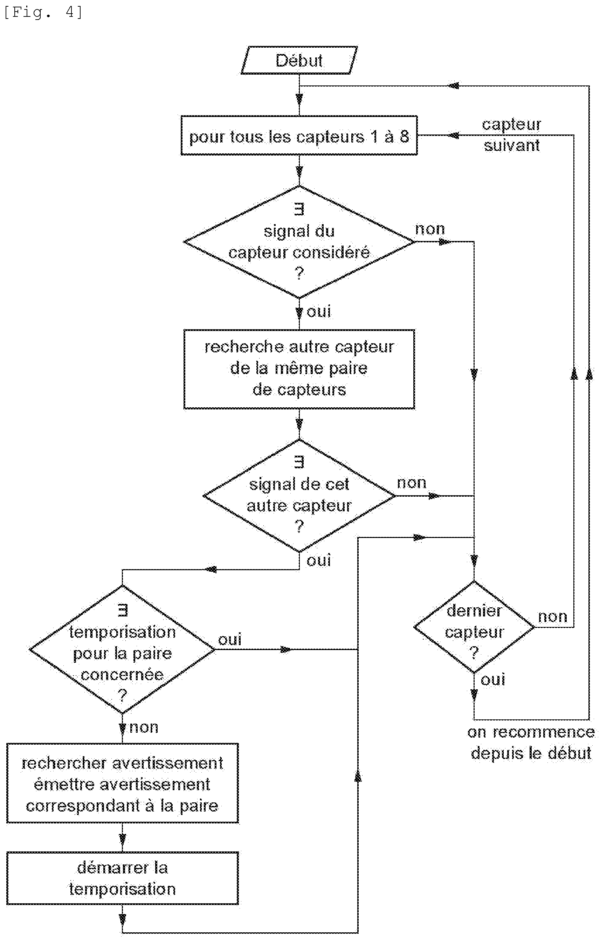

Sur la figure 4 est représenté l'ordinogramme correspondant au cas plus compliqué où chaque capteur (à infrarouges ou à ultrasons) émet son propre signal.

Les étapes sont commentées rébarbativement comme suit.

Pour chaque capteur d'un premier type de capteurs 1 à 8, le microprocesseur examine si le capteur considéré émet un signal.

Dans la négative, il se demande s'il s'agit du dernier capteur du premier type. Si c'est le cas, il reprend l'examen à partir du premier capteur du premier type, le capteur 1. Si ce n'est pas le cas, il passe au capteur du premier type suivant. Dans l'affirmative, il recherche l'autre capteur, c'est-à-dire le capteur du second type de capteurs 9 à 16 appartenant à la même paire de capteurs et examine si celui-ci émet un signal. Si cet autre capteur n'émet pas de signal, il n'y aura pas d'émission d'avertissement. Le microprocesseur se demande si le capteur est le dernier capteur du premier type. Si c'est le cas, il reprend l'examen à partir du premier capteur du premier type, le capteur 1. Si ce n'est pas le cas, il passe au capteur du premier type suivant.

Si l'autre capteur émet un signal, le microprocesseur examine si la temporisation liée à la paire à laquelle appartient le capteur est terminée. Si oui, il recherche l'avertissement correspondant à la paire de capteurs, émet l'avertissement puis démarre la temporisation. Ensuite, il se demande si le capteur du premier type est le dernier capteur du premier type. Si c'est le cas, il reprend l'examen à partir du premier capteur du premier type, le capteur 1. Si ce n'est pas le cas, il passe au capteur du premier type suivant.

Si la temporisation n'est pas terminée, inutile d'émettre à nouveau un avertissement et le microprocesseur se demande si le capteur du premier type est le dernier capteur du premier type. Si c'est le cas, il reprend l'examen à partir du premier capteur du premier type, le capteur 1. Si ce n'est pas le cas, il passe au capteur du premier type suivant, et ainsi de suite.

Comme précédemment, les temporisations visent à éviter que les mêmes avertissements soient donnés plusieurs fois d'affilée, voire en se superposant et en produisant ainsi une cacophonie.

Ainsi, le kit selon l'invention peut être utilisé pour contrôler l'entourage de son porteur.

Il peut aussi être très utile pour des gardiens de prison, des malvoyants ou des malentendants.

### Autres utilisations

Le kit selon l'invention peut aussi être utilisé dans des zoos, des animaleries ou établissements analogues. En effet, les spécialistes estiment que le COVID-19 est susceptible d'être transmis de l'homme à certains mammifères. On peut citer comme exemple les bonobos dont le comportement sexuel, peut-être encore plus que la grande analogie de leur l'ADN à celui des humains, montre à quel point ils sont proches de l'homme. Dans ces zoos ou animaleries, les soigneurs doivent donc prendre des précautions pour éviter toute contamination des animaux. L'utilisation du kit selon l'invention peut donc s'avérer très appropriée pour ces soigneurs.

Il convient alors, dans la présente description, d'étendre la signification du terme "personne" aux animaux, et ceci est d'ailleurs bien en phase avec les travaux préparatoires de certaines commissions juridiques visant à modifier dans le même sens le code civil français.

Enfin, le kit selon l'invention peut également être employé à temps plein ou partiel pour empêcher des chiens de trop s'approcher les uns des autres, les avertissements pouvant alors être des messages vocaux de leurs maîtres enregistrés dans l'appareil et leur ordonnant de s'éloigner de leurs congénères ou les rappelant à l'ordre. L'appareil est alors de préférence prévu pour être fixé soit au dispositif selon l'invention se présentant sous la forme d'une ceinture et entourant le poitrail du chien, soit au dispositif selon l'invention sous forme de collier pour chien.

## Revendications

1. Kit pour le maintien d'une distance entre des personnes ou des animaux, comprenant :
- un dispositif comprenant :
- un support pouvant former une boucle et comportant
- une pluralité de capteurs à infrarouges (1 à 8) aptes à détecter la présence d'un corps ayant une certaine température ;
- une pluralité de capteurs à ultrasons (9 à 16) aptes à détecter qu'un objet se trouve à une certaine distance ;
- et un appareil apte à recevoir les signaux émis par les capteurs (1 à 16) ou les paires de capteurs constituées chacune d'un capteur à infrarouges (1 à 8) et d'un capteur à ultrasons (9 à 16), à les analyser et à émettre au moins un avertissement sonore, lumineux et/ou vibratoire à chaque fois qu'une personne ou un animal est trop proche de l'utilisateur du dispositif.

2. Kit selon la revendication 1, dans lequel les positions des capteurs (1 à 16) ou des paires de capteurs [(1,9) à (8,16)] sont réglables les unes par rapport aux autres.

3. Kit selon l'une des revendications 1 et 2, dans lequel chaque capteur (1 à 16) ou chaque paire de capteurs [(1,9) à (8,16)] possède une fréquence de signal émis qui lui est propre.

4. Kit selon l'une des revendications précédentes, dans lequel la distance est une distance de sécurité et le support est une ceinture, un collier, un chapeau ou un casque.

5. Procédé pour le maintien d'une distance entre des personnes ou des animaux, comportant les étapes suivantes :
- on se procure un kit selon l'une des revendications 1 à 4,
- on place le support autour du corps d'une personne ou d'un animal en formant une boucle et en agençant les paires de capteurs [(1,9) à (8,16)] afin qu'elles réalisent ensemble une couverture de détection de 360 degrés autour de la personne ou de l'animal,
- on fait faire à l'appareil les opérations suivantes :
• passage en revue des fréquences d'émission de toutes les paires de capteurs [(1,9) à (8,16)];
• si un signal est détecté à une fréquence donnée, recherche dans une mémoire de l'avertissement lié à cette fréquence ;
• émission de l'avertissement ;
• retour au passage en revue des fréquences d'émission des paires de capteurs [(1,9) à (8,16)].

6. Procédé pour le maintien d'une distance entre des personnes ou des animaux comportant les étapes suivantes :
- on se procure un kit selon l'une des revendications 1 à 4,
- on place le support autour du corps d'une personne ou d'un animal en formant une boucle et en agençant les capteurs (1 à 16) afin qu'ils réalisent ensemble une couverture de détection de 360 degrés autour de la personne ou de l'animal,
- on fait faire à l'appareil les opérations suivantes :
pour chaque capteur d'un premier type de capteurs (1 à 8), le microprocesseur de l'appareil examine si le capteur considéré émet un signal ;
• dans la négative, il se demande s'il s'agit du dernier capteur (8) ; si c'est le cas, il reprend l'examen à partir du premier capteur (1) du premier type ; si ce n'est pas le cas, il passe au capteur du premier type suivant ;
• dans l'affirmative, il recherche l'autre capteur du second type de capteurs (9 à 16), appartenant à la même paire de capteurs et examine s'il émet un signal ; si cet autre capteur n'émet pas de signal, il se demande si le capteur considéré est le dernier capteur du premier type; si c'est le cas, il reprend l'examen à partir du premier capteur (1) du premier type ; si ce n'est pas le cas, il passe au capteur du premier type suivant ;
• si ledit autre capteur émet un signal, le microprocesseur examine si la temporisation liée à la paire à laquelle appartient l'autre capteur est terminée ;
o si oui, il recherche l'avertissement correspondant à la paire de capteurs, émet l'avertissement puis démarre la temporisation ; ensuite, il se demande si le capteur du premier type est le dernier capteur ; si c'est le cas, il reprend l'examen à partir du premier capteur (1) du premier type ; si ce n'est pas le cas, il passe au capteur du premier type suivant ;
o si la temporisation n'est pas terminée, le microprocesseur se demande si le capteur du premier type est le dernier capteur ; si c'est le cas, il reprend l'examen à partir du premier capteur (1) du premier type ; si ce n'est pas le cas, il passe au capteur du premier type suivant.

7. Utilisation d'un kit selon l'une des revendications 1 à 4 pour contrôler l'entourage d'un porteur de ce kit, que celui-ci soit un humain ou un animal.

## Patentansprüche

1. Kit zum Halten eines Abstands zwischen Personen oder Tieren, umfassend:
- eine Vorrichtung mit:
- einer Halterung, die eine Schlaufe bilden kann und aufweist
- eine Vielzahl von Infrarotsensoren (1 bis 8), geeignet zum Erfassen der Anwesenheit eines Körpers mit einer bestimmten Temperatur;
- eine Vielzahl von Ultraschallsensoren (9 bis16), geeignet zum Erfassen, ob sich ein Objekt in einem bestimmten Abstand befindet;
- und ein Gerät, das geeignet ist, die von den Sensoren (1 bis 16) oder den Paaren von Sensoren, die jeweils aus einem Infrarotsensor (1 bis 8) und einem Ultraschallsensor (9 bis 16) gebildet sind, emittierten Signale zu empfangen, sie zu analysieren und mindestens eine akustische, leuchtende und/oder vibrierende Warnung jedes Mal auszugeben, wenn eine Person oder ein Tier zu nahe am Benutzer der Vorrichtung ist.

2. Kit nach Anspruch 1, wobei die Positionen der Sensoren (1 bis 16) oder der Paare von Sensoren [(1, 9) bis (8, 16)] relativ zueinander einstellbar sind.

3. Kit nach einem der Ansprüche 1 oder 2, wobei jeder Sensor (1 bis 16) oder jedes Paar von Sensoren [(1,9) bis (8,16)] eine ihm eigene Frequenz des emittierten Signals besitzt.

4. Kit nach einem der vorhergehenden Ansprüche, wobei der Abstand ein Sicherheitsabstand ist und die Halterung ein Gürtel, eine Halskette, ein Hut oder ein Helm oder ein Headset ist.

5. Verfahren zum Halten eines Abstands zwischen Personen oder Tieren mit den folgenden Schritte:
- ein Kit nach einem der Ansprüche 1 bis 4 wird beschafft,
- die Halterung wird um den Körper einer Person oder eines Tieres unter Bilden einer Schlaufe angelegt und unter Anordnen der Sensorpaare [(1,9) bis (8,16)], damit sie zusammen einen Erfassungsbereich von 360 Grad um die Person oder das Tier herum realisieren,
- das Gerät wird veranlasst, die folgenden Operationen durchzuführen:
• Durchlauf der Sendefrequenzen aller Paare von Sensoren [(1,9) bis (8,16)];
• wenn ein Signal mit einer gegebenen Frequenz detektiert wird, Durchsuchen in einem Speicher nach der mit dieser Frequenz verbundenen Warnung;
• Ausgabe der Warnung;
• Rückkehr zum Durchlauf der Sendefrequenzen der Sensorpaare [(1,9) bis (8,16)].

6. Verfahren zum Halten eines Abstands zwischen Personen oder Tieren mit folgenden Schritten:
- eines Kit nach einem der Ansprüche 1 bis 4 wird beschafft,
- die Halterung wird um den Körper einer Person oder eines Tieres unter Bilden einer Schlaufe angelegt und unter Anordnen der Sensoren (1 bis 16)], damit sie zusammen einen Erfassungsbereich von 360 Grad um die Person oder das Tier herum realisieren,
- das Gerät wird veranlasst, die folgenden Operationen durchzuführen:
Für jeden Sensor eines ersten Typs der Sensoren (1 bis 8) prüft der Mikroprozessor des Geräts, ob der betrachtete Sensor ein Signal emittiert;
• verneinendenfalls fragt er sich, ob es sich um den letzten Sensor (8) handelt; bejahendenfalls nimmt er die Prüfung ab dem ersten Sensor (1) des ersten Typs wieder auf; verneinendenfalls geht er zum nächsten Sensor des ersten Typs über;
• bejahendenfalls sucht er nach dem anderen Sensor des zweiten Typs von Sensoren (9-16), der zum selben Paar von Sensoren gehört, und prüft, ob er ein Signal emittiert; wenn dieser andere Sensor kein Signal aussendet, fragt er sich, ob der betrachtete Sensor der letzte Sensor des ersten Typs ist; bejahendenfalls nimmt er die Prüfung ab dem ersten Sensor (1) des ersten Typs wieder auf; verneinendenfalls geht er zum nächsten Sensor des ersten Typs über;
• wenn der andere Sensor ein Signal emittiert, prüft der Mikroprozessor, ob die Zeitverzögerung, die mit dem Paar verknüpft ist, zu dem der andere Sensor gehört, abgelaufen ist;
o wenn ja, sucht er nach der Warnung, die dem Paar von Sensoren entspricht, gibt die Warnung aus und startet dann die Zeitverzögerung, dann fragt er sich, ob der Sensor des ersten Typs der letzte Sensor ist; bejahendenfalls nimmt er die Prüfung ab dem ersten Sensor (1) des ersten Typs wieder auf; verneinendenfalls geht er zum nächsten Sensor des ersten Typs über;
o wenn die Zeitverzögerung nicht abgelaufen ist, fragt der Mikroprozessor sich, ob der Sensor des ersten Typs der letzte Sensor ist; bejahendenfalls nimmt er die Prüfung ab dem ersten Sensor (1) des ersten Typs wieder auf; verneinendenfalls geht er zum nächsten Sensor des ersten Typs über.

7. Verwendung eines Kits nach einem der Ansprüche 1 bis 4, um die Umgebung eines Trägers dieses Kits zu überwachen, egal ob es sich bei dem Träger um einen Menschen oder ein Tier handelt.

## Claims

1. A kit for maintaining a distance between people or animals, comprising:
- a device comprising :
- a support capable of forming a loop and having
- a plurality of infrared sensors (1 to 8) capable of detecting the presence of a body having a certain temperature;
- a plurality of ultrasonic sensors (9 to 16) capable of detecting that an object is at a certain distance;
- and an apparatus capable of receiving the signals emitted by the sensors (1 to 16) or the pairs of sensors each consisting of an infrared sensor (1 to 8) and an ultrasound sensor (9 to 16), analysing them and emitting at least one audible, luminous and/or vibratory warning whenever a person or animal is too close to the user of the device.

2. A kit according to claim 1, wherein the positions of the sensors (1 to 16) or pairs of sensors [(1,9) to (8,16)] are adjustable relative to each other.

3. Kit according to one of claims 1 and 2, wherein each sensor (1 to 16) or each pair of sensors [(1,9) to (8,16)] has its own emitted signal frequency.

4. A kit as claimed in any of the preceding claims, wherein the distance is a safety distance and the support is a belt, collar, hat or helmet.

5. A method of maintaining a distance between people or animals, comprising the following steps:
- getting a kit according to one of claims 1 to 4,
- placing the support around the body of a person or animal, by forming a loop and arranging the pairs of sensors [(1, 9) to (8, 16)] so that together they provide 360 degrees of detection coverage around the person or animal,
- making the device perform the following operations:
• reviewing the emission frequencies of all the pairs of sensors [(1,9) to (8,16)];
• if a signal is detected at a given frequency, searching a memory for the warning associated with that frequency;
• issuing the warning ;
• returning to the review of the emission frequencies of the sensor pairs [(1,9) to (8,16)] .

6. A method of maintaining a distance between people or animals comprising the following steps:
- obtaining a kit according to one of claims 1 to 4,
- placing the support around the body of a person or animal, by forming a loop and arranging the sensors (1 to 16) so that together they provide 360 degrees of detection coverage around the person or animal,
- making the device perform the following operations:
for each sensor of a first type of sensor (1 to 8), the microprocessor of the device examines whether the sensor in question is emitting a signal ;
• if not, it asks whether it is the last sensor (8); if so, it starts again from the first sensor (1) of the first type; if not, it moves on to the next sensor of the first type ;
• if so, it searches for the other sensor of the second type of sensors (9 to 16), belonging to the same pair of sensors and examines whether it is emitting a signal; if this other sensor is not emitting a signal, it asks itself whether the sensor in question is the last sensor of the first type; if so, it resumes the examination from the first sensor (1) of the first type; if not, it moves on to the next sensor of the first type;
• if the said other sensor emits a signal, the microprocessor examines whether the time delay linked to the pair to which the other sensor belongs has ended;
o if so, it searches for the warning corresponding to the pair of sensors, issues the warning and then starts the time delay; it then asks itself whether the sensor of the first type is the last sensor; if so, it resumes the examination from the first sensor (1) of the first type; if not, it moves on to the next sensor of the first type;
o if the time delay has not ended, the microprocessor asks itself whether the sensor of the first type is the last sensor; if it is, it esumes the examination from the first sensor (1) of the first type; if it is not, it moves on to the next sensor of the first type.

7. Use of a kit according to one of claims 1 to 4 to monitor the surroundings of a wearer of this kit, whether the wearer is a human or an animal.
